# EUROPEAN PATENT SPECIFICATION

(11) **EP 0 491 702 B1**
(45) Date of publication and mention of the grant of the patent: **30.08.1995**
(21) Application number: 90910517.3
(22) Date of filing: 12.07.1990
(51) Int. Cl.: G03B 35/00

(54) **METHOD AND INTEGRATED OPTICAL SYSTEM FOR PICKUP, COPY AND TRIDIMENSIONAL REPRODUCTION OF STILL AND MOVING IMAGES**
VERFAHREN UND INTEGRIERTES OPTISCHES SYSTEM FÜR AUFNAHME, KOPIE UND WIEDERGABE DREIDIMENSIONALER RUHENDER ODER SICH BEWEGENDER BILDER
PROCEDE ET SYSTEME OPTIQUE INTEGRE POUR CAPTER, COPIER ET EFFECTUER LA REPRODUCTION TRIDIMENSIONNELLE D'IMAGES STATIQUES ET EN MOUVEMENT

(43) Date of publication of application: 01.07.1992
(73) Proprietor: DOMINGUEZ MONTES, Juan, E-28230 Las Rozas, Madrid (ES)
(72) Inventor: DOMINGUEZ MONTES, Juan, E-28230 Las Rozas, Madrid (ES)
(74) Representative: Elzaburu Marquez, Alberto
(86) International application number: PCT/ES90/00024
(87) International publication number: WO 92/01241

(56) References cited:
- CH-A- 181 585
- FR-A- 439 449
- FR-A- 2 103 822
- US-A- 3 657 981
- US-A- 4 327 980

## Description

### Field of the invention

The present application relates to a method and to an optical system which are integrated and in which three-dimensional static or moving pictures are taken, the films coming from the different cameras are copied onto a single film of modest length, and this film is reproduced, furnishing new three-dimensional or moving pictures. The invention encompasses cinematographic systems, static signs, slides and video, including television, principally for domestic use, in shop windows, conference rooms and other similar places for exhibition.

The Applicant is the holder of the Spanish Patent of Invention with Publication No. 2,000,293 (Application Number 8 603 612), of the Spanish Patent of Invention with Publication Number 20 135 69 (Application Number 8 902 155), and of the Spanish Patent Application being processed 8 900 722 filed on 28 February 1989. Likewise, the Applicant has filed the Patent Applications PCT/ES 90/00013 and ES 90/00014, both being processed, as well as other applications corresponding to the Spanish ones, in various countries and at the European Patent Office.

In these patents and patent applications there are described and claimed various aspects of optical systems for achieving three-dimensional reproductions, based on the angular differentiation of pictures. Specifically, in the Spanish Patent Publication 20 135 69 as well as in the Application PCT ES 90/00013, there is described an improved screen capable of being used in the optical systems in question, and also a process for manufacturing said improved screen.

### Background of the invention

Systems based on the angular differentiation of pictures require the taking of a large number of pictures from different places and the projecting of the same number of pictures from different locations.

From the literature which deals with the taking of three-dimensional pictures, it is known that the maximum separation between the optical centres of the taking lenses for the reproduction to appear continuous is a function of the distance between the nearest object and the furthest object (depth of field) as well as of the distance between these objects with respect to the picture-taking device.

In order to apply these theoretical results in practice, in many cases of the prior art a separation is achieved between the optical centres of the taking lenses which is less than the breadth of common, marketed or conventional cameras.

If the picture to be taken were to remain motionless, then it would be possible to do the taking with a conventional camera situated in a different place at each instant. However, if the picture were moving, this system would be inappropriate.

As far as the Applicant knows, there exist on the market very few cameras which can fulfil the conditions required here for taking pictures. Those which are known have several lenses of small diameter and a likewise reduced negative format. These cameras are generally designed for their use in photography, and are used for reproducing static pictures in most cases such as photographs on paper. A very small number of pictures, usually four, is used, which is entirely insufficient for systems based on the angular differentiation of pictures, and for this reason cannot be used in the present case.

Because of this lack of suitable cameras for taking three-dimensional pictures, it is necessary to take a large number of two-dimensional pictures, each one with a conventional camera; correspondingly, the same large number of projectors or projection lenses would be needed to reproduce the pictures taken three-dimensionally.

In the United States Patent 1,883,290 of Ives, there are described three systems of reproduction by projection which are appropriate for static or moving pictures.

Of these three systems, that of back-projection is suitable only for systems based on the scalar differentiation of pictures, and therefore cannot be considered in the present case.

On the other hand, the other two systems, both of which are front-projection systems, can be employed for the angular differentiation of pictures.

In the first of these systems as many projectors and films are used as there are pictures.

The second system employs a single film in only one projector with as many lenses as pictures taken, the latter being mutually separated by the same distance as would occur if individual projectors were involved.

The disadvantage of both systems arises from the large volume occupied by the reproduction part of the system, as well as from the enormous length of the film and of the projector or projectors when the number of pictures is high.

### Summary of the invention

In view of the above, and in his desire to obtain maximum efficiency from his optical systems for three-dimensional reproduction, those which are dealt with profusely in the applications and patents mentioned earlier at the beginning of this document, the Applicant has developed a method and an optical system, which are integrated, for taking, copying and reproducing three-dimensional pictures.

As has already been explained, present optical systems for three-dimensional pictures are based on the angular differentiation of these pictures.

Systems based on the angular differentiation of pictures have to employ a large number of taken two-dimensional pictures and the same number of reproduced pictures.

For taking a large number of pictures it is advisable to direct the optical axes of the n taking lenses (cameras) towards the point which later, during reproduction, will be situated on the screen. (The number n of lenses or cameras can take several values, always multiples of 3, the value 15 being preferred.) This will avoid the lateral cameras excluding the main motif of the scene from the field. Since each picture is taken with a different lens, which also belongs to a different camera, the focusing of all the optical axes onto the same point is very easily achieved by inclining each camera by the necessary angle in the horizontal plane. This focusing can be done automatically at each moment, controlled using a mechanical system of appropriately synchronised bellows. On the other hand, since the distance between the optical centres of the lenses of the cameras must, in many cases, be less than the breadth of the latter, a tricky problem arises which has to be resolved using special devices and processes.

The Applicant has succeeded in solving these taking problems using a method and a corresponding optical system in such a way that the cameras operate as if their optical centres were situated at a lesser mutual distance than that permitted by the breadth of the cameras, if the latter were situated immediately next to one another.

The first step of the overall method of the present invention, comprises
recording static or motion pictures by using a predetermined number n, n being a multiple of 3, preferably 15, of conventional cameras (C1, C2, ..., Cn) employing a negative film, a slide film or a video tape for recording two-dimensional pictures with each of these cameras (C1, C2, ..., Cn) by:
arranging the cameras (Ci) in two groups (C2, C4, ..., C14; C1, C3, ..., C15) in such a way that all cameras of each group are substantially arranged along a horizontal line, the optical axes of the cameras of each group being separated by a distance D at least equal to the width of each of the cameras;
positioning the two groups of cameras so that their optical axes are mutually perpendicular,
placing a semi-transparent plate (L1-L1′) at an angle of 45° with respect to the axes of the cameras of the two groups so that the cameras of one group facing one surface of the plate observe the object in transmission, whereas the cameras of the other group facing the other surface of the plate observe said object in reflection;
positioning a black, light absorbing plate (LN₁) at an angle of 45° with respect to said semi-transparent plate so that that undesired light transmitted by said semi-transparent plate to those cameras viewing the object in reflection and that undesired light reflected by the semi-transparent plate to those cameras viewing the object in transmission is suppressed; and
arranging the two groups of cameras in such a way that the optical axis of each camera of each of the groups as seen from the object in reflection or transmission by said semi-transparent plate appears half-way between the optical axes of two adjacent cameras (Ci-1, Ci+1) of the other group, whereby an effective line of interleaved cameras (C1,C2 ..., C15) is optically formed in which the resulting effective distance (D/2) between the optical axes of adjacent cameras (Ci Ci+1) is reduced to one half of the distance (D) between the axes of adjacent cameras (Ci, Ci+2) in each of the groups.

As a second step, the overall method comprises
transferring the n conjugated pictures taken by the cameras (Ci) corresponding to a same instant of imaging the object onto a single image carrier constituted by a negative film, a slide film or a video tape, said transferring step including
(i) grouping the pictures into a number n/3 of picture triplets (T₁, T₂, T₃, ...) in such a way that those pictures taken by the cameras arranged on the left third portion of said effective combined line of cameras are arranged as the left side of each picture triplet, those pictures taken by the cameras arranged on the right third portion of said effective combined line of cameras are arranged as the right side of each picture triplet and those pictures taken by the cameras arranged in the central third portion of said effective combined line of cameras are arranged as the middle of each picture triplet, and specularly inverting both the right and left pictures with respect to the central picture of each picture triplet;
(ii) arranging the picture triplets at a predetermined transverse distance (H) and at a predetermined longitudinal distance (K_{R}) from one another; and
(iii) copying the so arranged picture triplets either directly onto the single image carrier which is used for subsequent projection, or indirectly via a screen from which another camera takes a combined image of the picture triplets;

The third step of the method consists of
projecting the picture triplets recorded on said single image carrier onto a projection screen (PA) by means of a projector using a number n/3 of projection lenses (OP₁, OP₂, OP₃, ...) wherein the projection lenses are adjusted in such a way that the central pictures (6 ... 10) of the picture triplets on said single image carrier are projected either directly onto the projection screen or via reflection by a reflecting mirror (RF) positioned in front of the projection lenses,
and the left and right lateral pictures of the picture triplets (1 ... 5; 11 ... 15) are respectively projected via an additional left lateral reflection mirror (RI) and via an additional right lateral reflection mirror (RD); and wherein each one of the projection lenses (OP₁, OP₂, ...) is positioned with respect to the adjacent projection lenses at a vertical and at a horizontal distance corresponding to the transverse distances (H) and to the longitudinal distance (K_{R}) between adjacent picture triplets (T₁, T₂ T₃, ...) on the single image carrier.

An additional embodiment of the method in accordance with the invention comprises the arrangement of cameras in two further groups (C3, C7, C11, C15 and C4, C8, C12) arranged with a second semi-transparent plate (L2-L2′) and a second black plate (LN₂) as in the first two groups (C1, C5, C9, C13 and C2, C6, C10, C14) and wherein the first two groups of cameras form a first supergroup (A) and the further two groups form a second supergroup (B), the main optical axis resulting from reflection or transmission on the first semi-transparent plate (L1-L1′) of the first supergroup (A) is positioned at a right angle with respect to the main optical axis resulting from reflection or transmission on the second semi-transparent plate (L2-L2′), a third semi-transparent plate (L3-L3′) is positioned at 45° with respect to the two main optical axes from the two supergroups (A, B) and a third black plate (LN₃) is positioned at an angle of 45° with respect to the third semi-transparent plate (L3-L3′) so as to suppress unwanted light reflected by the third semi-transparent plate to the first and second supergroup (A, B) respectively, whereby the distance between optical axes of the adjacent cameras (Ci, Ci+1) results in (D/4) the fourth part of the distance (D) between adjacent cameras of the same group.

According to another embodiment, the method provides for arranging n cameras in 2^{m} groups in which each one of them comprises at least one camera, each two groups being arranged in accordance with the above mentioned arrangement by means of a semi-transparent plate and an opaque one to form a super group, each pair of super groups being arranged in accordance with the above mentioned arrangement, by means of an additional semitransparent plate and opaque plate to form super groups of order 2, each pair of super groups of order 2 will regroup following the same procedure as described above, forming super groups of order 3 and continuing in this manner until a single super group containis all the cameras. Thereby the distance between optical axes of the adjacent cameras, Ci, Ci+1 results in (D/2^{m}) the 2^{m}-th part of the distance (D) between adjacent cameras of the same group.

With this combined method a very simple and convenient reproduction is achieved of the three-dimensional pictures on a small- to intermediate-sized screen, the projector occupying a third part of the space which it would occupy if the n pictures were projected using n projection lenses situated one next to the other with the relevant height offset. If the projecting is done in a cinema, this projection artifice would become unnecessary.

Corresponding optical arrangements, which will be detailed below, have been developed in order to embody this overall method.

An optical system for recording, copying and reproducing three-dimensionally static or motion pictures according to the above described, comprises:
a predetermined number n, n being a multiple of 3, preferably 15, of conventional cameras (C1, C2, ..., Cn) arranged in two groups on a platform provided with guide rails;
the cameras (Ci) in each group (C1, C3, C5, ...; C2, C4, C6, ...) being arranged along a horizontal line so that their optical axes being separated by a distance (D) at least equal to the width of each of the cameras;
positioning the two groups of cameras so that the optical axes of the cameras of one camera group being mutually perpendicular with respect to the cameras of the other group;
a semi-transparent plate (L1-L1′) being interposed at an angle of 45° with respect to the optical axes of the cameras of the two groups so that the cameras of one group facing one surface of the plate observe the object in transmission, whereas the cameras of the other group facing the other surface of the plate observe said object in reflection;
an black, light absorbing plate (LN₁) being positioned at an angle of 45° with respect to said semi-transparent plate so that that undesired light transmitted by said semi-transparent plate to those cameras viewing the object in reflection and that undesired light reflected by the semi-transparent plate to those cameras viewing the object in transmission is suppressed;
each camera of each group (Ci, i = 1 to n) being arranged in such a way that its optical axis as seen from the object in reflection or transmission, by said semi-transparent plate appears half-way between the optical axes of the corresponding cameras (Ci-1, Ci+1) of the other group, whereby the resulting effective distance between the optical axes of adjacent cameras in both groups is reduced to one half of the distance (D) between the axes of the cameras of one group; and
an adjusting means for adjusting and mutually matching the angles and distances for focusing of the cameras with respect to the object to be photographed.

The arrangement for copying image carriers consists of n copying projectors arranged in a number n/3 of triplets positioned at the same transverse location wherein each one of these projectors projects directly or indirectly the corresponding picture from each one of the recording cameras onto a single image carrier in such a way that the left and right pictures of each resulting picture triplet are disposed specularly inverted with respect to the central element of each picture triplet;
The arrangement for three-dimensional projection of pictures consist of a projector having a number n/3 of real projection lenses (OP₁, ... OP₅) arranged for projecting the film comprising the picture triplets (T₁ ... T₅), facing a system of mirrors composed of a front mirror (RF) and two lateral reflecting mirrors (RD, RI) thereby in effect providing in total three groups of n effective projection lenses consisting of a right group (OPV(D)) of n/3 virtual projection lenses, a left group (OPV(I)) of n/3 virtual projection lenses and the group (OPR) of n/3 real projection lenses, said group of real projection lenses being in a central position between the right and the left virtual groups, the real projection lenses (OP₁ ... OP₅) being longitudinally and transversely displaced by distances corresponding to the longitudinal offset (K_{R}) and transverse offset (H) of the picture triplets on the film; and
a transparent screen (PA) disposed above the projection lenses (OP₁ ... OP₅) facing the front mirror (RF).

In accordance with an additional feature of the optical system according to the invention further cameras are arranged in two further groups thus giving four groups in total (C1, C5, C9, C13; C2, C6, C10, C14; C3, C7, C11, C15; C4, C8, C12), the first two groups forming a first supergroup (A) and the further two groups arranged as the first two groups with a second semi-transparent plate (L2-L2′) and a second black plate (LN₂) forming a second supergroup (B), the two supergroups being arranged such that the resulting optical axes of the two supergroups (A, B) are mutually perpendicular; a third semi-transparent plate (L3-L3′) and a third black plate (LN₃), the sizes of said third plates being adapted to the combination of the cameras in the supergroups (A, B), are interposed at an angle of 45° between the two supergroups (A, B) in such a way that the optical axes of the individual recording cameras remain interlocked between the optical axes of every two adjacent cameras of the opposing group, this interlocking relationship being repeated accordingly for the cameras of the opposing supergroups (A, B), whereby the distance between optical axes of the adjacent cameras (Ci,Ci+1) results in (D/4) the fourth part of the distance (D) between adjacent cameras of the same group.

According to another embodiment, the method provides for arranging n cameras in 2^{m} groups in which each one of them comprises at least one camera, each two groups are arranged in accordance with the above mentioned arrangement by means of one semitransparent plate and one opaque one to form a super group, each pair of super groups having, in accordance with the above mentioned arrangement, by means of an additional semitransparent plate and an opaque plate to form super groups of order 2, each pair of super groups of order 2 to be regrouped following the same procedure as described above forming super groups of order 3 and continuing in this way until a single super group contains all the cameras. Thereby the distance beween optical axes of the adjacent cameras Ci Ci+1 results in D/2^{m} the 2^{m}-th part of the distance (D) between adjacent cameras of the same group.

The optical system according to the invention, further comprises a system of stepping motors and a microprocessor arranged for regulating and synchronising of the recording cameras.

Also, the optical system comprises a mechanical system of bellows arranged for regulating and synchronising of the recording cameras.

The invention will be described below with the aid of the attached drawings, in which:
Figure 1 represents diagrammatically the taking of pictures by a group of cameras via a semitransparent plate;
Figure 2 represents diagrammatically the taking of pictures by a group of cameras by reflection in the semitransparent plate;
Figure 3 represents diagrammatically the taking with the combination of two camera groups with an interposed semitransparent plate;
Figure 4 represents an arrangement of taking cameras distributed in four groups, with the appropriate number of interposed semitransparent plates;
Figure 5 represents how the picture trios copied according to the invention remain longitudinally distributed on a film;
Figure 6 represents a partial optical diagram of the projecting performed with five projection lenses, according to the invention;
Figure 7 represents diagrammatically in elevation the arrangement of the parts of the projector system of the present invention; and
Figure 8 represents in diagrammatic perspective view a small-sized projection device according to the invention.

Solely for the purposes of explanation it will be understood that n is equal to fifteen, or, what amounts to the same thing, fifteen cameras or taking lenses and five projection lenses are used.

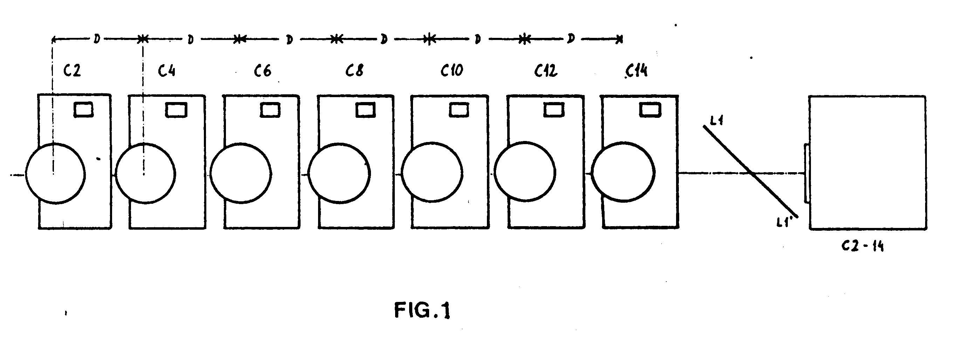

Figure 1 represents in a diagrammatic manner how the cameras would be seen in background via a semitransparent plate. In this diagram it has been assumed that there are seven cameras disposed one next to the other in a line facing a elongated semitransparent plate positioned in a longitudinal direction forming 45° with the axes of the cameras. In the left-hand part of the figure it is observed how the taking cameras C2, C4, C6, C8, C10, C12 and C14 would be projected in the plane of the picture; the distance between optical axes of the taking cameras is D.

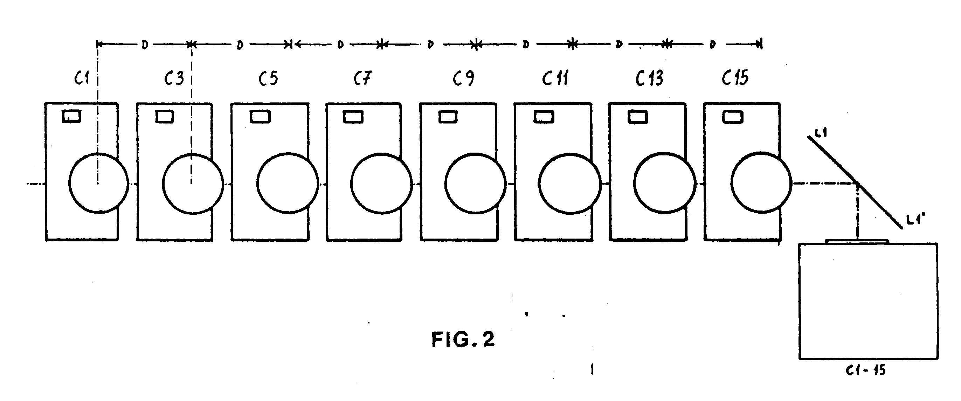

In Figure 2 is represented in the right-hand part in side view one camera of the eight placed in file and which are situated facing a semitransparent plate positioned in a longitudinal direction forming 45° with the axes of the cameras. In the left-hand part of the figure is represented how the cameras C1, C3, C5, C7, C9, C11, C13 and C15 would be observed in reflection; likewise, the distance between optical axes of the taking cameras is D.

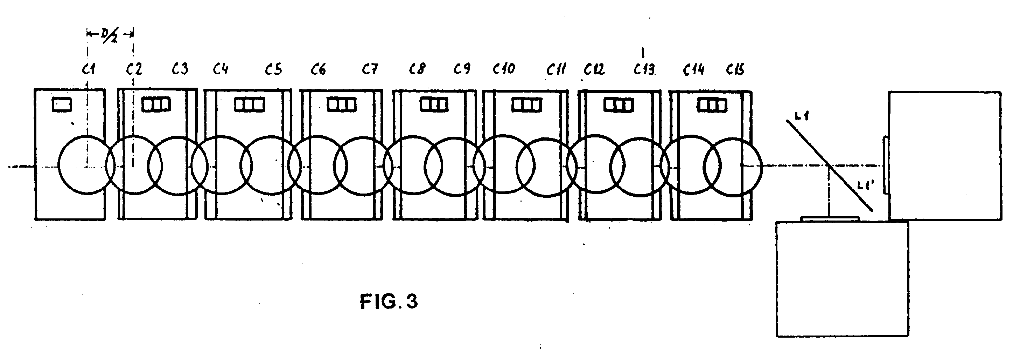

In Figure 3 is represented the taking arrangement in accordance with the invention, with two camera groups represented on the right in side elevation view, each group being positioned in file in a horizontal line and having a semitransparent plate inserted between them which forms 45° with the respective optical axes.

On the left of this Figure 3 is represented how the two camera groups would be observed in combination, some in background and others in reflection. With this, the distance between optical axes of two adjacent taking cameras remains D/2. It is clearly demonstrated with the three Figures 1 to 3, and in particular with this Figure 3, that with the artifice developed by the present invention the cameras can be successfully brought optically closer to one another by a distance less than the breadth of each one of them.

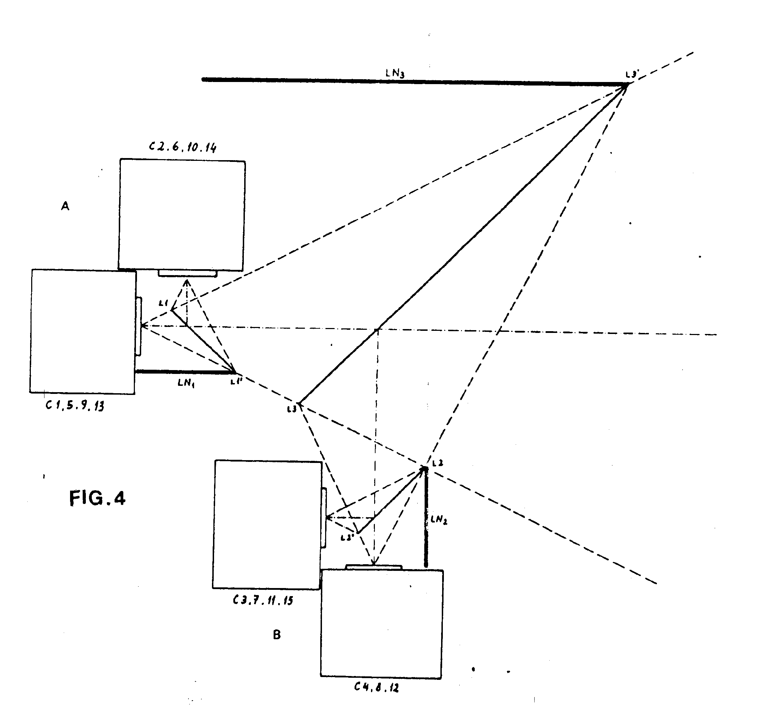

As represented in Figure 4, in order to be able to bring the cameras even closer optically, these cameras have been subdivided into four groups, distributed in two supergroups each composed of two camera groups with mutually perpendicular optical axes and an interposed plate, L1-L1′ or L2-L2′, combined with a corresponding black plate LN1 or LN2, which absorbs the undesired rays. Thus, the supergroup A is composed of the group of cameras C1, C5, C9, C13 disposed in horizontal file facing the transparent surface of the plate L1-L1′, and is forming 45° with the optical axes of the cameras in question; the four cameras C2, C6, C10, C14 are disposed in horizontal file facing the other, reflecting, surface of the plate L1-L1′. Perpendicular relative to this subgroup A of cameras is disposed the subgroup B of cameras which consists of a horizontal group of cameras C3, C7, C11 and C15 disposed facing the reflecting surface of a plate L2-L2′, placed at 45° with respect to the optical axes of these latter cameras; the black plate LN2 is situated at 45° next to the transparent surface of this plate. The cameras C4, C8, C12 are situated facing the transparent surface of the plate L2-L2′ and disposed in a horizontal line. With the purpose of succeeding in the optical distance in the picture plane of the cameras remaining reduced to D/4, each one of the supergroups A and B is regarded as being simple camera groups, these supergroups being disposed with mutually perpendicular optical axes; a plate L3,L3′ is inserted between them, and, forming 45° with the transparent surface of this plate L3-L3′, there is located the black plate LN3. In this figure is represented as an optical diagram the distribution of the central and extreme rays from the optical centres of the taking cameras. With this artifice, the distance between optical axes of the cameras situated in each horizontal group is successfully divided by 4. It is clear that, by repeating this arrangement, this distance could be divided consecutively by 2.

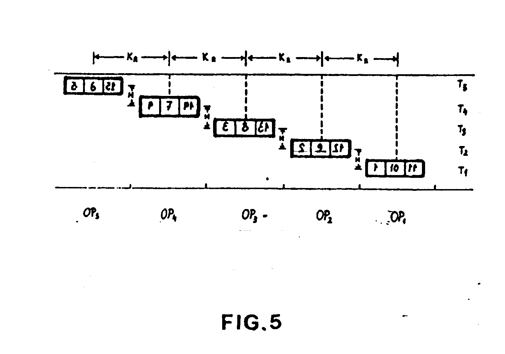

In Figure 5 is diagrammatically represented how fifteen pictures are combined, coming from the taking cameras C1 to C15, distributed in five picture trios which have been reproduced by projecting the lateral pictures 1-5 and 11-15 in an inverted position with respect to the central pictures 6 to 10. This inversion has been represented in the figure by inverting the picture reference numbers. Also represented in this figure is how the five projection lenses OP1, OP2, OP3, OP4 and OP5 are arranged, as well as the longitudinal distribution on a film of the five picture trios with optical axes mutually offset by the distance K_{R} which is the distance existing between adjacent projection lenses, whereas there is a height distance H between each trio of pictures of the film. This height distance is the same as that which the adjacent projection lenses maintain between themselves in height.

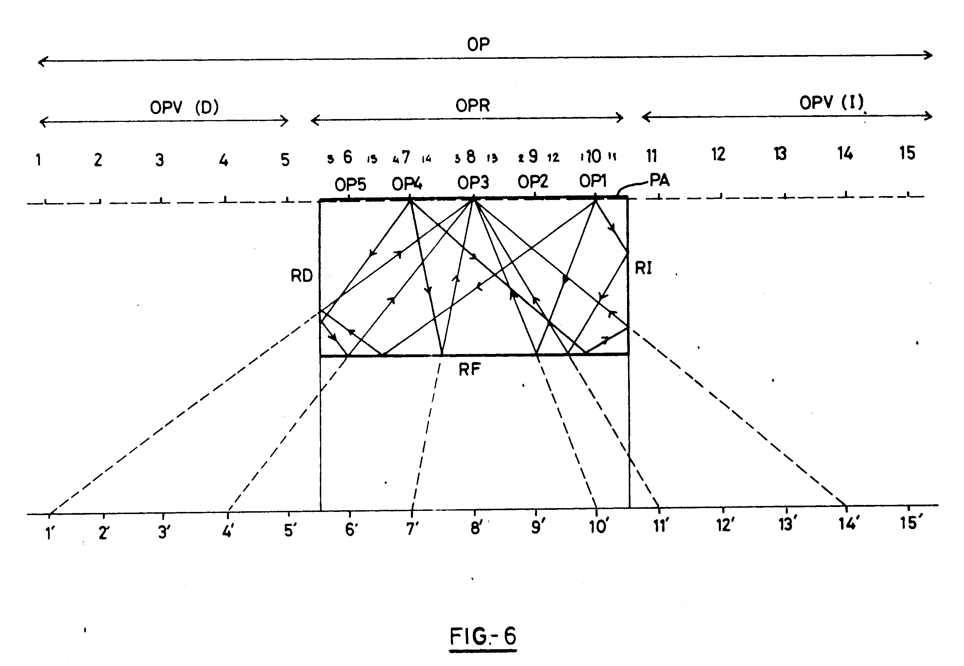

In Figure 6 is represented in a partial optical diagram the distribution of the various rays projected from the projection lenses OP1, OP3 and OP4, in order to represent each one of the three possible situations of projection devices, that is to say OP1 representing how the extreme lenses are projected; OP4 representing how the intermediate lenses are projected and OP3 representing how the central lens is projected. Facing these projection lenses are situated the three reflectors, front RF and lateral, right RD and left RI. These reflectors project the fifteen pictures 1 to 15 onto the screen PA, fitting the pictures 1-15 taken into one third of the overall distance. With this arrangement, with only five projection lenses the same optical result is achieved as if there were fifteen projection lenses; the real ones OPR corresponding to pictures 6-10; and the virtual ones OPV(D) corresponding to pictures 1 to 5, and OPV(I) corresponding to the left pictures 11-15.

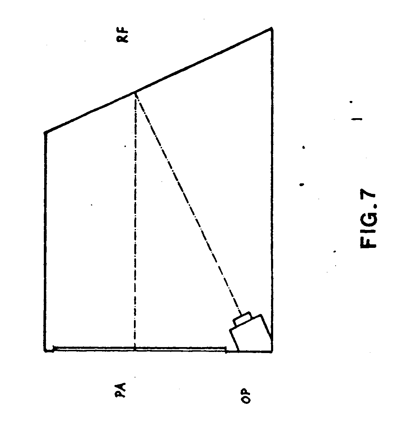

With Figure 7 is represented in sectional side view the arrangement of the lenses OP, of the front reflector RF and of the screen PA. It is observed that the transparent screen PA is situated, in the longitudinal direction, in line with the longitudinal arrangement of the lenses OP1 to OP5.

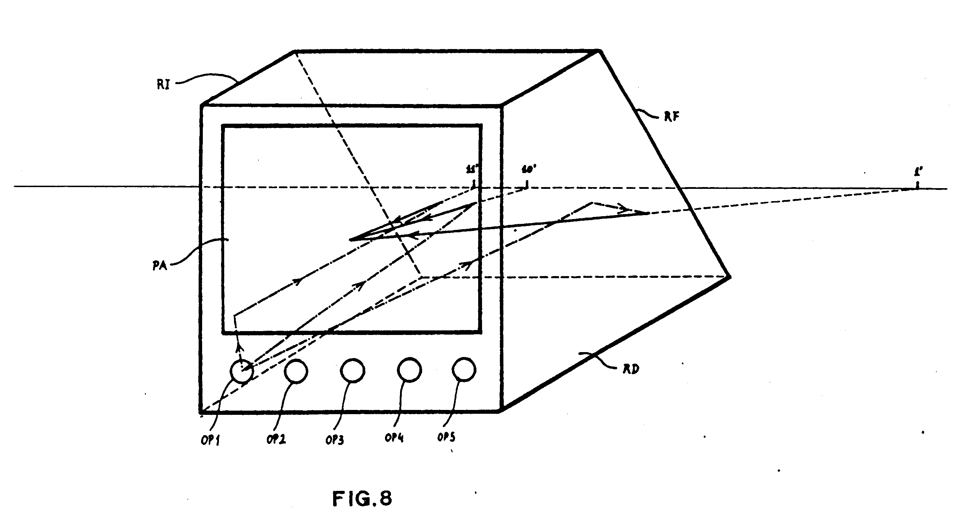

Finally, in Figure 8 is represented a small- or medium-sized projecting device with the arrangement of the various parts. In this figure is represented as an optical diagram the path of the rays coming from the projection lens OP1 which the pictures 1′, 10′ and 11′ project, via the reflectors RI, RF and RD, onto the transparent screen PA.

The preceding explanations should be considered as only a preferred illustrative embodiment. Nevertheless, different values of n (always multiples of 3) could be imagined. The taking, copying and projecting relationships would vary accordingly, in a proportional way, therefore further explanations are omitted. Likewise, other devices equivalent to those explained here could be imagined provided that they fall within the following claims.

## Claims

1. Method of recording, copying and reproducing three-dimensionally static or motion pictures comprising the following operations:
(a) recording static or motion pictures by using a predetermined number n, n being a multiple of 3, preferably 15, of conventional cameras (C1, C2, ..., Cn) employing a negative film, a slide film or a video tape for recording two-dimensional pictures with each of these cameras (C1, C2, ..., Cn) by:
arranging the cameras (Ci) in two groups (C2, C4, ..., C14; C1, C3, ..., C15) in such a way that all cameras of each group are substantially arranged along a horizontal line, the optical axes of the cameras of each group being separated by a distance D at least equal to the width of each of the cameras;
positioning the two groups of cameras so that their optical axes are mutually perpendicular,
placing a semi-transparent plate (L1-L1′) at an angle of 45° with respect to the axes of the cameras of the two groups so that the cameras of one group facing one surface of the plate observe the object in transmission, whereas the cameras of the other group facing the other surface of the plate observe said object in reflection;
positioning a black, light absorbing plate (LN₁) at an angle of 45° with respect to said semi-transparent plate so that that undesired light transmitted by said semi-transparent plate to those cameras viewing the object in reflection and that undesired light reflected by the semi-transparent plate to those cameras viewing the object in transmission is suppressed; and
arranging the two groups of cameras in such a way that the optical axis of each camera of each of the groups as seen from the object in reflection or transmission by said semi-transparent plate appears half-way between the optical axes of two adjacent cameras (Ci-1, Ci+1) of the other group, whereby an effective line of interleaved cameras (C1, C2, ..., C15) is optically formed in which the resulting effective distance (D/2) between the optical axes of adjacent cameras (Ci, Ci+1) is reduced to one halt of the distance (D) between the axes of adjacent cameras (Ci, Ci+2) in each of the groups;
(b) transferring the n conjugated pictures taken by the cameras (Ci) corresponding to a same instant of imaging the object onto a single image carrier constituted by a negative film, a slide film or a video tape, said transferring step comprising
(i) grouping the pictures into a number n/3 of picture triplets (T₁, T₂, T₃, ...) in such a way that those pictures taken by the cameras arranged on the left third portion of said effective combined line of cameras are arranged as the left side of each picture triplet, those pictures taken by the cameras arranged on the right third portion of said effective combined line of cameras are arranged as the right side of each picture triplet and those pictures taken by the cameras arranged in the central third portion of said effective combined line of cameras are arranged as the middle of each picture triplet, and specularly inverting both the right and left pictures with respect to the central picture of each picture triplet;
(ii) arranging the picture triplets at a predetermined transverse distance (H) and at a predetermined longitudinal distance (K_{R}) from one another; and
(iii) copying the so arranged picture triplets either directly onto the single image carrier which is used for subsequent projection, or indirectly via a screen from which another camera takes a combined image of the picture triplets;
(c) projecting the picture triplets recorded on said single image carrier onto a projection screen (PA) by means of a projector using a number n/3 of projection lenses (OP₁, OP₂, OP₃, ...) wherein the projection lenses are adjusted in such a way that the central pictures (6 ... 10) of the picture triplets on said single image carrier are projected either directly onto the projection screen or via reflection by a reflecting mirror (RF) positioned in front of the projection lenses, and the left and right lateral pictures of the picture triplets (1 ... 5; 11 ... 15) are respectively projected via an additional left lateral reflection mirror (RI) and via an additional right lateral reflection mirror (RD); and wherein each one of the projection lenses (OP₁, OP₂, ...) is positioned with respect to the adjacent projection lenses at a vertical and at a horizontal distance corresponding to the transverse distances (H) and to the longitudinal distance (K_{R}) between adjacent picture triplets (T₁, T₂, T₃, ...) on the single image carrier.

2. Method according to claim 1 wherein further cameras are arranged in two further groups (C3, C7, C11, C15 and C4, C8, C12) arranged with a second semi-transparent plate (L2-L2′) and a second black plate (LN₂) as in the first two groups (C1, C5, C9, C13 and C2, C6, C10, C14) and wherein the first two groups of cameras form a first supergroup (A) and the further two groups form a second supergroup (B), the main optical axis resulting from reflection or transmission on the first semi-transparent plate (L1-L1′) of the first supergroup (A) is positioned at a right angle with respect to the main optical axis resulting from reflection or transmission on the second semi-transparent plate (L2-L2′), a third semi-transparent plate (L3-L3′) is positioned at 45° with respect to the two main optical axes from the two supergroups (A, B) and a third black plate (LN₃) is positioned at an angle of 45° with respect to the third semi-transparent plate (L3-L3′) so as to suppress unwanted light reflected by the third semi-transparent plate to the first and second supergroup (A, B) respectively.

3. Method according to claims 1 and 2, wherein n cameras are arranged in 2^{m} groups, m being an integer in which each one of them comprises at least one camera, each two groups being arranged in accordance with the arrangement of claim 2 by means of a semi-transparent plate and a black one to form a supergroup, each pair of supergroups being arranged in accordance with the arrangement of claim 2, by means of an additional semitransparent plate and black plate to form supergroups of order 2, each pair of supergroups of order 2 will regroup following the method as described in claim 2, forming supergroups of order 3 and continuing in this manner until a single supergroup containis all the cameras, whereby the distance between optical axes of the adjacent cameras, (Ci, Ci+1) results in D/2^{m}, the 2^{m}-th part of the distance D between adjacent cameras of the same group.

4. Optical system for recording, copying and reproducing three-dimensionally static or motion pictures according to the method of claim 1, comprising:
(a) a predetermined number n, n being a multiple of 3, preferably 15, of conventional cameras (C1, C2, ..., Cn) arranged in two groups on a platform provided with guide rails;
the cameras (Ci) in each group (C1, C3, C5, ...; C2, C4, C6, ...) being arranged along a horizontal line so that their optical axes being
separated by a distance (D) at least equal to the width of each of the cameras;
positioning the two groups of cameras so that the optical axes of the cameras of one camera group being mutually perpendicular with respect to the cameras of the other group;
a semi-transparent plate (L1-L1′) being interposed at an angle of 45° with respect to the optical axes of the cameras of the two groups so that the cameras of one group facing one surface of the plate observe the object in transmission, whereas the cameras of the other group facing the other surface of the plate observe said object in reflection;
a black, light absorbing plate (LN₁) being positioned at an angle of 45° with respect to said semi-transparent plate so that that undesired light transmitted by said semi-transparent plate to those cameras viewing the object in reflection and that undesired light reflected by the semi-transparent plate to those cameras viewing the object in transmission is suppressed;
each camera of each group (Ci, i = 1 to n) being arranged in such a way that its optical axis as seen from the object in reflection or transmission, by said semi-transparent plate appears half-way between the optical axes of the corresponding cameras (Ci-1, Ci+1) of the other group, whereby the resulting effective distance between the optical axes of adjacent cameras in both groups is reduced to one half of the distance (D) between the axes of the cameras of one group; and
an adjusting means for adjusting and mutually matching the angles and distances for focusing of the cameras with respect to the object to be photographed;
(b) an arrangement for copying image carriers consisting of n copying projectors arranged in a number n/3 of triplets positioned at the same transverse location wherein each one of these projectors projects directly or indirectly the corresponding picture from each one of the recording cameras onto a single image carrier in such a way that the left and right pictures of each resulting picture triplet are disposed specularly inverted with respect to the central element of each picture triplet;
(c) a projector having a number n/3 of real projection lenses (OP₁, ... OP₅) arranged for projecting the film comprising the picture triplets (T₁ ... T₅), facing a system of mirrors composed of a front mirror (RF) and two lateral reflecting mirrors (RD, RI) thereby in effect providing in total three groups of n effective projection lenses consisting of a right group (OPV(D)) of n/3 virtual projection lenses, a left group (OPV(I)) of n/3 virtual projection lenses and the group (OPR) of n/3 real projection lenses, said group of real projection lenses being in a central position between the right and the left virtual groups, the real projection lenses (OP₁ ... OP₅) being longitudinally and transversely displaced by distances corresponding to the longitudinal offset (K_{R}) and transverse offset (H) of the picture triplets on the film; and
a transparent screen (PA) disposed above the projection lenses (OP₁ ... OP₅) facing the front mirror (RF).

5. Optical system according to claim 4, wherein further cameras are arranged in two further groups thus giving four groups in total (C1, C5, C9, C13; C2, C6, C10, C14; C3, C7, C11, C15; C4, C8, C12), the first two groups forming a first supergroup (A) and the further two groups arranged as the first two groups with a second semi-transparent plate (L2-L2′) and a second black plate (LN₂) forming a second supergroup (B), the two supergroups being arranged such that the resulting optical axes of the two supergroups (A, B) are mutually perpendicular; a third semi-transparent plate (L3-L3′) and a third black plate (LN₃), the sizes of said third plates being adapted to the combination of the cameras in the supergroups (A, B), are interposed at an angle of 45° between the two supergroups (A, B) in such a way that the optical axes of the individual recording cameras remain interlocked between the optical axes of every two adjacent cameras of the opposing group, this interlocking relationship being repeated accordingly for the cameras of the opposing supergroups (A, B).

6. Optical system according to claims 4 and 5, wherein n cameras are arranged in 2^{m} groups, m being an integer, in which each one of them comprises at least one camera, each two groups being arranged in accordance with the arrangement of claim 5 by means of a semi-transparent plate and a black one to form a supergroup, each pair of supergroups being arranged in accordance with the arrangement of claim 5, by means of an additional semitransparent plate and black plate to form supergroups of order 2, each pair of supergroups of order 2 will regroup following the same procedure as described above, forming super groups of order 3 and continuing in this manner until a single supergroup contains all the cameras, whereby the distance between optical axes of the adjacent cameras, (Ci, Ci+1) results in D/2^{m}, the 2^{m}-th part of the distance D between adjacent cameras of the same group.

7. Optical system according to claim 4 or 5, further comprising a system of stepping motors and a microprocessor arranged for regulating and synchronising of the recording cameras.

8. Optical system according to claim 4 or 5, further comprising a mechanical system of bellows arranged for regulating and synchronising of the recording cameras.

## Patentansprüche

1. Verfahren zum Aufzeichnen, Kopieren und dreidimensionalem Wiedergeben von Fest- oder Bewegtbildern, das die folgenden Arbeitsgänge umfaßt:
(a) Aufzeichnen von Fest- oder Bewegtbildern unter Verwendung einer vorherbestimmten Anzahl n, wobei n ein Vielfaches von 3, vorzugsweise 15, herkömmlichen Kameras (C1, C2, ..., Cn) ist, die einen Negativfilm, einen Diafilm oder ein Videoband für die Aufzeichnung zweidimensionaler Bilder mit jeder dieser Kameras (C1, C2, ..., Cn) verwenden, indem:
die Kameras (Ci) in zwei Gruppen (C2, C4, ..., C14; C1, C3, ..., C15) derart angeordnet sind, daß alle Kameras jeder Gruppe im wesentlichen entlang einer horizontalen Linie angeordnet sind, wobei die optischen Achsen der Kameras jeder Gruppe durch einen Abstand D getrennt sind, der zumindest der Breite jeder der Kameras gleich ist;
die beiden Kameragruppen so positioniert sind, daß ihre optischen Achsen zueinander senkrecht sind;
eine halbtransparente Platte (L1-L1′) in einem Winkel von 45° bezogen auf die Achsen der Kameras der beiden Gruppen angeordnet ist, so daß die Kameras einer Gruppe, die einer Fläche der Platte gegenüberliegen, das Objekt durchscheinend beobachten, während die Kameras der anderen Gruppe, die der anderen Fläche der Platte gegenüberliegen, dieses Objekt gespiegelt beobachten;
eine schwarze, lichtabsorbierende Platte (LN₁) in einem Winkel von 45° bezogen auf die halbtransparente Platte positioniert ist, so daß das unerwünschte Licht, das über die halbtransparente Platte zu den Kameras übertragen wird, die das Objekt gespiegelt sehen, und das unerwünschte Licht, das über die halbtransparente Platte zu den Kameras reflektiert wird, die das Objekt durchscheinend sehen, unterdrückt wird; und indem
die beiden Kameragruppen derart angeordnet sind, daß die optische Achse jeder Kamera jeder Gruppe, so wie durch die halbtransparente Platte das Objekt gespiegelt oder durchscheinend gesehen wird, auf halber Strecke zwischen den optischen Achsen zweier benachbarter Kameras (Ci-1, Ci+1) der anderen Gruppe erscheint, wodurch eine effektive Linie verschachtelter Kameras (C1, C2, ..., C15) optisch gebildet wird, bei der der daraus entstehende effektive Abstand (D/2) zwischen den optischen Achsen benachbarter Kameras (Ci, Ci+1) auf die Hälfte des Abstands (D) zwischen den Achsen der benachbarten Kameras (Ci, Ci+2) in jeder der Gruppen reduziert wird;
(b) Übertragen der n zugeordneten Bilder, die von den Kameras (Ci) aufgenommen worden sind, die einem gleichen Aufnahmemoment des Objekts entsprechen, auf einen einzelnen Bildträger bestehend aus einem Negativfilm, einem Diafilm oder einem Videoband, wobei diese Übertragungsstufe umfaßt:
(i) das Gruppieren der Bilder in eine Anzahl n/3 von Dreiergruppen von Bildern (T₁, T₂, T₃, ...) derart, daß die Bilder, die von den Kameras aufgenommen worden sind, die im linken dritten Abschnitt der effektiven kombinierten Linie von Kameras angeordnet sind, als die linke Seite jeder Dreiergruppe von Bildern angeordnet sind, daß die Bilder, die von den Kameras aufgenommen worden sind, die im rechten dritten Abschnitt der effektiven kombinierten Linie von Kameras angeordnet sind, als die rechte Seite jeder Dreiergruppe von Bildern angeordnet sind, und daß die Bilder, die von den Kameras aufgenommen worden sind, die im mittleren dritten Abschnitt der effektiven kombinierten Linie von Kameras angeordnet sind, als Mittelpunkt jeder Dreiergruppe von Bildern angeordnet sind, und sowohl die rechten als auch die linken Bilder bezogen auf die mittleren Bilder jeder Dreiergruppe von Bildern spiegelnd umgekehrt werden;
(ii) das Anordnen der Dreiergruppen von Bildern in einem vorherbestimmten Querabstand (H) und einem vorherbestimmten Längsabstand (K_{R}) voneinander; und
(iii) das Kopieren der so angeordneten Dreiergruppen von Bildern entweder direkt auf den einzelnen Bildträger, der für die nachfolgende Projektion verwendet wird, oder indirekt über einen Bildschirm, von dem eine weitere Kamera ein kombiniertes Bild der Dreiergruppen von Bildern aufnimmt;
(c) Projizieren der auf dem einzelnen Bildträger aufgezeichneten Dreiergruppen von Bildern auf einen Projektionsbildschirm (PA) mittels eines Projektors, der eine Anzahl n/3 von Projektionslinsen (OP₁, OP₂, OP₃, ...) verwendet, wobei die Projektionslinsen derart eingestellt sind, daß die mittleren Bilder (6... 10) der Dreiergruppen von Bildern auf diesem einzelnen Bildträger entweder direkt auf den Projektionsbildschirm oder durch Reflexion durch einen vor den Projektionslinsen angeordneten Reflexionsspiegel (RF) projiziert werden, und die linken und rechten seitlichen Bilder der Dreiergruppen von Bildern (1 ... 5; 11 ... 15) jeweils mittels eines zusätzlichen linken seitlichen Reflexionsspiegels (RI) und mittels eines zusätzlichen rechten seitlichen Reflexionsspiegels (RD) projiziert werden; und wobei jede der Projektionslinsen (OP₁, OP₂, ...) bezogen auf die benachbarten Projektionslinsen in einem vertikalen und einem horizontalen Abstand angeordnet ist, der den Querabständen (H) und dem Längsabstand (K_{R}) zwischen benachbarten Dreiergruppen von Bildern (T₁, T₂, T₃, ...) auf dem einzelnen Bildträger entspricht.

2. Verfahren nach Anspruch 1, wobei weitere Kameras in zwei weiteren Gruppen (C3, C7, C11, C15 und C4, C8, C12) angeordnet sind, die wie bei den ersten beiden Gruppen (C1, C5, C9, C13 und C2, C6, C10, C14) mit einer zweiten halbtransparenten Platte (L2-L2′) und einer zweiten schwarzen Platte (LN₂) angeordnet sind, und wobei die ersten zwei Kameragruppen eine erste Übergruppe (A) und die anderen zwei Gruppen eine zweite Übergruppe (B) bilden, wobei die optische Hauptachse, die das Ergebnis der Spiegelung bzw. Durchlassung durch die erste halbtransparente Platte (L1-L1′) der ersten Übergruppe (A) ist, in einem rechten Winkel bezogen auf die optische Hauptachse angeordnet ist, die das Ergebnis der Spiegelung bzw. Durchlassung durch die zweite halbtransparente Platte (L2-L2′) ist, eine dritte halbtransparente Platte (L3-L3′) ist in einem Winkel von 45° bezogen auf die beiden optischen Hauptachsen der beiden Übergruppen (A, B) angeordnet, und eine dritte schwarze Platte (LN₃) ist in einem Winkel von 45° bezogen auf die dritte halbtransparente Platte (L3-L3′) so positioniert, daß sie unerwünschtes Licht unterdrückt, das durch die dritte halbtransparente Platte auf die erste und zweite Übergruppe (A, B) jeweils reflektiert worden ist.

3. Verfahren nach Anspruch 1 und 2, wobei n Kameras in 2^{m} Gruppen angeordnet sind, wobei m eine Ganzzahl ist, wobei jede von ihnen wenigstens eine Kamera umfaßt, wobei jeweils zwei Gruppen entsprechend der Anordnung nach Anspruch 2 angeordnet sind, indem sie mittels einer halbtransparenten und einer schwarzen Platte eine Übergruppe bilden, wobei jedes Paar von Übergruppen entsprechend der Anordnung nach Anspruch 2 angeordnet ist. indem eine zusätzliche halbtransparente Platte und eine schwarze Platte Übergruppen der Ordnung 2 bilden, wobei jedes Paar von Übergruppen der Ordnung 2 entsprechend dem Verfahren, wie es in Anspruch 2 beschrieben ist, erneut gruppiert, indem Übergruppen der Ordnung 3 gebildet werden und weiter auf diese Weise, bis eine einzige Übergruppe sämtliche Kameras beinhaltet, wodurch der Abstand zwischen optischen Achsen der benachbarten Kameras (Ci, Ci+1) zum 2^{m}-ten Teil des Abstands D/2^{m} zwischen benachbarten Kameras der gleichen Gruppe führt.

4. Optisches System zum Aufzeichnen, Kopieren und dreidimensionalem Wiedergeben von Fest- oder Bewegtbildern nach dem Verfahren gemäß Anspruch 1, umfassend:
(a) eine vorherbestimmte Anzahl n, wobei n ein Vielfaches von 3, vorzugsweise 15, herkömmlichen Kameras (C1, C2, ..., Cn) ist, die in zwei Gruppen auf einem mit Führungsschienen versehenen Podest angeordnet sind;
wobei die Kameras (Ci) in jeder Gruppe (C1, C3, C5, ...; C2, C4, C6, ...) entlang einer horizontalen Linie angeordnet sind, so daß ihre optischen Achsen durch einen Abstand (D) getrennt sind, der zumindest der Breite jeder der Kameras gleich ist;
wobei die beiden Kameragruppen so positioniert sind, daß die optischen Achsen der Kameras einer Kameragruppe bezogen auf die Kameras der anderen Gruppe zueinander senkrecht sind;
wobei eine halbtransparente Platte (L1-L1′) in einem Winkel von 45° bezogen auf die optischen Achsen der Kameras der beiden Gruppen eingeschoben ist, so daß die Kameras einer Gruppe, die einer Fläche der Platte gegenüberliegen, das Objekt durchscheinend beobachten, während die Kameras der anderen Gruppe, die der anderen Fläche der Platte gegenüberliegen, dieses Objekt gespiegelt beobachten;
wobei eine schwarze, lichtabsorbierende Platte (LN₁) in einem Winkel von 45° bezogen auf die halbtransparente Platte angeordnet ist, so daß das unerwünschte Licht, das über die halbtransparente Platte zu den Kameras übertragen wird, die das Objekt gespiegelt sehen, und das unerwünschte Licht, das über die halbtransparente Platte zu den Kameras reflektiert wird, die das Objekt durchscheinend sehen, unterdrückt wird;
wobei jede Kamera jeder Gruppe (Ci, i = 1 bis n) derart angeordnet ist, daß ihre optische Achse, so wie durch die halbtransparente Platte das Objekt gespiegelt oder durchscheinend gesehen wird, auf halber Strecke zwischen den optischen Achsen der entsprechenden Kameras (Ci-1, Ci+1) der anderen Gruppe erscheint, wodurch der entstandene effektive Abstand zwischen den optischen Achsen benachbarter Kameras in beiden Gruppen auf die Hälfte des Abstands (D) zwischen den Achsen der Kameras einer Gruppe reduziert wird; und wobei
eine Einstelleinrichtung für die Einstellung und gegenseitige Anpassung der Winkel und Abstände zum Fokussieren der Kameras auf das zu photographierende Objekt vorgesehen ist;
(b) eine Anordnung zum Kopieren von Bildträgern bestehend aus n Kopier-Projektoren, die in einer Anzahl von n/3 Dreiergruppen angeordnet sind, die an der gleichen Transversalposition positioniert sind, wobei jeder dieser Projektoren das entsprechende Bild direkt oder indirekt von einer der aufzeichnenden Kameras auf einen einzelnen Bildträger so projiziert, daß die linken und rechten Bilder jeder entstandenen Dreiergruppe von Bildern gespiegelt umgekehrt bezogen auf das mittlere Element jeder Dreiergruppe von Bildern angeordnet sind;
(c) einen Projektor mit einer Anzahl von n/3 echten Projektionslinsen (OP₁, ... OP₅), die zum Projizieren des Films mit den Dreiergruppen (T₁ ... T₅) von Bildern angeordnet sind, die einem System von Spiegeln bestehend aus einem vorderen Spiegel (RF) und zwei seitlichen Reflexionsspiegeln (RD, RI) gegenüberliegen, wodurch tatsächlich insgesamt drei Gruppen von n effektiven Projektionslinsen vorgesehen sind, die aus einer rechten Gruppe (OPV(D)) von n/3 virtuellen Projektionslinsen, einer linken Gruppe (OVP(I)) von n/3 virtuellen Projektionslinsen und der Gruppe (OPR) von n/3 echten Projektionslinsen bestehen, wobei sich die Gruppe der echten Projektionslinsen in einer mittleren Stellung zwischen der rechten und der linken virtuellen Gruppe befindet, wobei die echten Projektionslinsen (OP₁ ... OP₅) durch Abstände längs und quer verschoben sind, die der Längsversetzung (K_{R}) und der Querversetzung (H) der Dreiergruppen von Bildern auf dem Film entsprechen; und
wobei ein transparenter Bildschirm (PA) oberhalb der Projektionslinsen (OP₁ ... OP₅) gegenüber dem vorderen Spiegel (RF) angeordnet ist.

5. Optisches System nach Anspruch 4, wobei weitere Kameras in zwei weiteren Gruppen angeordnet sind, was insgesamt vier Gruppen ergibt (C1, C5, C9, C13; C2, C6, C10, C14; C3, C7, C11, C15; C4, C8, C12), wobei die beiden ersten Gruppen eine erste Übergruppe (A) und die beiden anderen Gruppen, die als die ersten beiden Gruppen mit einer zweiten halbtransparenten Platte (L2-L2′) und einer zweiten schwarzen Platte (LN₂) angeordnet sind, eine zweite Übergruppe (B) bilden, wobei die beiden Übergruppen so angeordnet sind, daß die sich ergebenden optischen Achsen der beiden Übergruppen (A, B) zueinander senkrecht sind; wobei-eine dritte halbtransparente Platte (L3-L3′) und eine dritte schwarze Platte (LN₃), deren Größen auf die Kombination der Kameras in den Übergruppen (A, B) angepaßt sind, in einem Winkel von 45° zwischen den beiden Übergruppen (A, B) so zwischengelagert sind, daß die optischen Achsen der einzelnen aufzeichnenden Kameras weiterhin gegenseitig zwischen den optischen Achsen von je zwei benachbarten Kameras der gegenüberliegenden Gruppe durchdringen ineinandergreifen, wobei dieses Ineinandergreifen in entsprechender Weise für die Kameras der gegenüberliegenden Übergruppen (A, B) wiederholt wird.

6. Optisches System nach den Ansprüchen 4 und 5, wobei n Kameras in 2^{m} Gruppen angeordnet sind, wobei m eine Ganzzahl ist, bei der jede von ihnen wenigstens eine Kamera umfaßt, wobei je zwei Gruppen entsprechend der Anordnung nach Anspruch 5 angeordnet sind, indem eine halbtransparente und eine schwarze Platte eine Übergruppe bilden, wobei jedes Paar von Übergruppen entsprechend der Anordnung nach Anspruch 5 angeordnet ist, indem eine zusätzliche halbtransparente Platte und eine schwarze Platte Übergruppen der Ordnung 2 bilden, wobei jedes Paar von Übergruppen der Ordnung 2 entsprechend dem gleichen Verfahren, wie vorstehend beschrieben, erneut gruppiert, indem Übergruppen der Ordnung 3 gebildet werden und weiter auf diese Weise, bis eine einzige Übergruppe sämtliche Kameras beinhaltet, wodurch der Abstand zwischen optischen Achsen der benachbarten Kameras (Ci, Ci+1) zum 2^{m}-ten Teil des Abstands D/2^{m} zwischen benachbarten Kameras der gleichen Gruppe führt.

7. Optisches System nach Anspruch 4 oder 5, das ferner ein System von Schrittmotoren und einen Mikroprozessor umfaßt, der für die Regelung und Synchronisierung der aufzeichnenden Kameras angeordnet ist.

8. Optisches System nach Anspruch 4 oder 5, das ferner ein mechanisches System von Balgen umfaßt, die für die Regelung und Synchronisierung der aufzeichnenden Kameras angeordnet sind.

## Revendications

1. Procédé d'enregistrement, de copiage et de reproduction d'images tridimensionnelles statiques ou mobiles, ce procédé comprenant les opérations ci-après:
(a) l'enregistrement d'images statiques ou mobiles par utilisation d'un nombre prédéterminé n, n étant un multiple de 3, de préférence le nombre 15, d'appareils photographiques classiques (C1, C2, ..., Cn) utilisant un film négatif, une diapositive ou une bande vidéo pour enregistrer des images bidimensionnelles avec chacun de ces appareils photographiques (C1, C2, ..., Cn) par:
disposition des appareils photographiques (Ci) en deux groupes (C2, C4, ... C14; C1, C3, ..., C15) de façon telle que tous les appareils photographiques de chaque groupe soient disposés sensiblement le long d'une ligne horizontale, les axes optiques des appareils photographiques de chaque groupe étant séparés par une distance D au moins égale à la largeur de chacun des appareils photographiques;
positionnement des deux groupes d'appareils photographiques de manière que leurs axes optiques soient mutuellement perpendiculaires,
mise en place d'une plaque semi-transparente (L1-L1′) suivant un angle de 45° par rapport aux axes des appareils photographiques des deux groupes de telle sorte que les appareils photographiques d'un des groupes faisant face à une des surfaces de la plaque voient l'objet par transmission, tandis que les appareils photographiques de l'autre groupe faisant face à l'autre surface de la plaque voient ledit objet par réflexion;
positionnement d'une plaque noire (LN1), absorbant la lumière, suivant un angle de 45° par rapport à ladite plaque semi-transparente de telle sorte que la lumière indésirée transmise par ladite plaque semi-transparente aux appareils photographiques voyant l'objet par réflexion et la lumière indésirée réfléchie par la plaque semi-transparente vers les appareils photographiques voyant l'objet par transmission soient supprimées; et
disposition de deux groupes d'appareils photographiques de manière telle que l'axe optique de chaque appareil photographique de chacun des groupes, tel que vu à partir de l'objet par réflexion ou par transmission par ladite plaque semi-transparente, apparaisse à mi-distance entre les axes optiques des deux appareils photographiques adjacents (Ci-1, Ci+1) de l'autre groupe, grâce à quoi est formée une ligne effective d'appareils photographiques imbriqués (C1,C2, ..., C15) dans lequel la distance effective résultante (D/2) entre les axes optiques des appareils photographiques adjacents (Ci, Ci+1) se trouve réduite à la moitié de la distance (D) entre les axes des appareils photographiques adjacents (Ci, Ci+2) de chacun des groupes;
(b) le transfert de n images conjuguées prises par les appareils photographiques (Ci) correspondant à un même instant de formation d'image de l'objet sur un support unique d'image constitué par un film négatif, une diapositive ou une bande vidéo, ladite étape de transfert comprenant:
(i) le groupement des images en un nombre n/3 de triplets d'images (T₁, T₂, T₃, ...) de manière telle que les images prises par les appareils photographiques disposés sur le tiers gauche de ladite ligne combinée effective d'appareils photographiques soient disposées comme étant le côté gauche de chaque triplet d'images, les images prises par les appareils photographiques disposés sur le tiers droit de ladite ligne combinée effective d'appareils photographiques soient diposées comme étant le côté droit de chaque triplet d'images et les images prises par les appareils photographiques disposés dans le tiers central de ladite ligne combinée effective soient disposées comme étant le milieu de chaque triplet d'images, et à inverser de façon spéculaire à la fois les images droite et gauche par rapport à l'image centrale de chaque triplet d'images;
(ii) la disposition des triplets d'images à une distance transversale prédéterminée (H) et à une distance longitudinale prédéterminée (K_{R}) l'un de l'autre; et
(iii) le copiage des triplets d'images ainsi disposés, soit directement sur le support unique d'images qui est utilisé en vue d'une projection ultérieure, soit indirectement par l'intermédiaire d'un écran à partir duquel un autre appareil photographique prend une image combinée des triplets d'images;
(c) la projection des triplets d'images enregistrés sur ledit support unique d'images sur un écran de projection (PA) au moyen d'un projecteur utilisant un nombre n/3 de lentilles de projection (OP₁, OP₂, OP₃, ...), les lentilles de projection étant ajustées de manière telle que les images centrales (6 ... 10) des triplets d'images sur le support unique d'images soient projetées, soit directement sur l'écran de projection, soit par réflexion par un miroir réfléchissant (RF) positionné en avant des lentilles de projection, et les images latérales gauche et droite des triplets d'images (1 ... 5; 11 ... 15) étant projetées respectivement par l'intermédiaire d'un miroir réfléchissant supplémentaire (RI) latéral gauche et par l'intermédiaire d'un miroir réfléchissant supplémentaire (RD) latéral droit; et chacune des lentilles de projection (OP₁, OP₂, ...) étant positionnée par rapport aux lentilles de projection adjacentes à une distance verticale et à une distance horizontale correspondant aux distances transversales (H) et à la distance longitudinale (K_{R}) entre les triplets d'images adjacents (T₁, T₂, T₃, ...) sur le support unique d'images.

2. Procédé selon la revendication 1, dans lequel d'autres appareils photographiques sont disposés en deux autres groupes (C3, C7, C11, C15 et C4, C8, C12) disposés avec une seconde plaque semi-transparente (L2-L2′) et une seconde plaque noire (LN₂) comme dans les deux premiers groupes (C1, C5, C9, C13 et C2, C6, C10, C14) et dans lequel les deux premiers groupes d'appareils photographiques forment un premier super-groupe (A) et les deux autres groupes forment un second super-groupe (B), l'axe optique principal résultant d'une réflexion ou d'une transmission sur la première plaque semi-transparente(L1-L1′) du premier des super-groupes (A) est positionné suivant un angle droit par rapport à l'axe optique principal résultant d'une réflexion ou d'une transmission au niveau de la seconde plaque semi-transparente (L2-L2′), une troisième plaque semi-transparente (L3-L3′) est positionnée suivant un angle de 45° par rapport aux deux axes optiques principaux issus des deux super-groupes (A, B) et une troisième plaque noire (LN₃) est positionnée suivant un angle de 45° par rapport à la troisième plaque semi-transparente (L3-L3′) de manière à supprimer la lumière non voulue réfléchie par la troisième plaque semi-transparente vers les premier et second super-groupes (A, B) respectivement.

3. Procédé selon les revendications 1 et 2, dans lequel n appareils photographiques sont agencés en 2^{m} groupes, m étant un nombre entier, dont chacun d'eux comprend au moins un appareil photographique, chaque paire de groupes étant agencée en conformité avec l'agencement de la revendication 2 au moyen d'une plaque semi-transparente et d'une plaque noire de manière à former un super-groupe, chaque paire de super-groupes étant agencée en conformité avec l'agencement de la revendication 2, au moyen d'un plaque semi-transparente supplémentaire et d'une plaque noire de manière à former des super-groupes d'ordre 2, chaque paire de super-groupes d'ordre 2 étant regroupée suivant le procédé tel que décrit dans la revendication 2, en formant des super-groupes d'ordre 3 et en continuant de cette manière jusqu'à ce qu'un seul super-groupe contienne tous les appareils photographiques, grâce à quoi la distance entre les axes optiques des appareils photographiques adjacents (Ci, Ci+1) se traduit par D/2^{m}, la 2^{m}ième partie de la distance D entre les appareils photographiques adjacents du même groupe.

4. Système optique pour enregistrer, copier et reproduire des images tridimensionnelles statiques ou mobiles selon le procédé de la revendication 1, ce système comprenant:
(a) un nombre prédéterminé n, n étant un multiple de 3, de préférence 15, d'appareils photographiques classiques (C1, C2, ..., Cn) disposés en deux groupes sur une plate-forme pourvue de rails de guidage;
les appareils photographiques (Ci) de chaque groupe (C1, C3, C5, ...; C2, C4, C6, ...) étant disposés le long d'une ligne horizontale de telle sorte que leurs axes optiques soient séparés d'une distance (D) au moins égale à la largeur de chacun des appareils photographiques; les deux groupes d'appareils photographiques étant positionnés de telle sorte que les axes optiques des appareils photographiques d'un des groupes d'appareils photographiques soient perpendiculaires mutuellement par rapport aux appareils photographiques de l'autre groupe;
une plaque semi-transparente (L1-L1′) interposée suivant un angle de 45° par rapport aux axes optiques des appareils photographiques des deux groupes de telle sorte que les appareils photographiques d'un groupe faisant face à une des surfaces de la plaque voient l'objet par transmission tandis que les appareils photographiques de l'autre groupe faisant face à l'autre surface de la plaque voient ledit objet par réflexion;
une plaque noire (LN1) absorbant la lumière, positionnée suivant un angle de 45° par rapport à ladite plaque semi-transparente de telle sorte que la lumière indésirée transmise par ladite plaque semi-transparente aux appareils photographiques voyant l'objet par réflexion et la lumière indésirée réfléchie par la plaque semi-transparente vers les appareils photographiques voyant l'objet par transmission soient supprimées;
chaque appareil photographique de chaque groupe (Ci, i=1 à n) étant disposé de manière telle que son axe optique, tel que vu depuis l'objet par réflexion ou par transmission par ladite plaque semi-transparente, apparaisse à mi-distance entre les axes optiques des appareils photographiques correspondants (Ci-1, Ci+1) de l'autre groupe, grâce à quoi la distance effective résultante entre les axes optiques des appareils photographiques adjacents dans les deux groupes soit réduite à la moitié de la distance (D) entre les axes des appareils photographiques d'un groupe; et
un moyen de réglage pour ajuster et adapter mutuellement les angles et les distances en vue d'une focalisation des appareils photographiques par rapport à l'objet à photographier;
(b) un agencement pour un copiage sur des supports d'images, cet agencement consistant en n projecteurs de copiage disposés en un nombre n/3 de triplets positionnés au même emplacement transversal, chacun de ces projecteurs projetant directement ou indirectement l'image correspondante depuis chacun des appareils photographiques d'enregistrement sur un seul support d'images de manière telle que les images gauche et droite de chaque triplet d'images résultant soient disposées de manière inversée spéculairement par rapport à l'élément central de chaque triplet d'images;
(c) un projecteur comportant un nombre n/3 de lentilles de projection réelles (OP₁, ..., OP₅) disposées, en vue de projeter le film comprenant les triplets d'images (T₁, ... T₅), en face d'un système de miroirs composé d'un miroir avant (RF) et de deux miroirs réfléchissants latéraux (RD, RI) en procurant en fait de cette manière un total de trois groupes de n lentilles de projection effectives consistant en un groupe droit (OPV(D)) de n/3 lentilles de projection virtuelles, un groupe gauche (OPV(I)) de n/3 lentilles de projection virtuelles et le groupe (OPR) de n/3 lentilles de projection réelles, ledit groupe de lentilles de projection réelles se trouvant dans une position centrale entre les groupes virtuels droit et gauche, les lentilles de projection réelles (OP₁, ..., OP₅) étant décalées dans le sens longitudinal et dans le sens transversal de distances correspondant au décalage longitudinal (K_{R}) et au décalage transversal (H) des triplets d'images se trouvant sur le film; et
un écran transparent (PA) disposé au-dessus des lentilles de projection (OP₁, ...OP₅) en face du miroir avant (RF).

5. Système optique selon la revendication 4, dans lequel d'autres appareils photographiques sont disposés en deux autres groupes en donnant ainsi quatre groupes au total (C1, C5, C9, C13; C2, C6, C10, C14; C3, C7, C11, C15; C4, C8, C12), les deux premiers groupes formant un premier super-groupe (A) et les deux autres groupes, agencés comme les deux premiers groupes avec une seconde plaque semi-transparente (L2-L2′) et une seconde plaque noire (LN₂) formant un second super-groupe (B), les deux super-groupes étant agencés de telle sorte que les axes optiques résultants des deux super-groupes (A, B) soient perpendiculaires mutuellement; une troisième plaque semi-transparente (L3-L3′) et une troisième plaque noire (LN₃), les dimensions desdites troisièmes plaques étant adaptées à la combinaison des appareils photographiques des super-groupes (A, B), sont interposées suivant un angle de 45° entre les deux super-groupes (A, B) de manière telle que les axes optiques des appareils photographiques d'enregistrement individuels restent intercalés entre les axes optiques de chaque paire d'appareils photographiques adjacents du groupe opposé, cette disposition intercalée étant répétée en conséquence pour les appareils photographiques des super-groupes opposés (A, B).

6. Système optique selon les revendications 4 et 5, dans lequel n appareils photographiques sont disposés en 2^{m} groupes, m étant un nombre entier, chacun d'eux comprenant au moins un appareil photographique, chaque paire de groupes étant agencée en conformité avec l'agencement de la revendication 5 au moyen d'une plaque semi-transparente et d'une plaque noire de manière à former un super-groupe, chaque paire de super-groupes étant agencée en conformité avec l'agencement de la revendication 5, au moyen d'une plaque semi-transparente et d'un plaque noire supplémentaires de manière à former des super-groupes d'ordre 2, chaque paire de super-groupes d'ordre 2 étant regroupée suivant la même procédure que celle décrite ci-dessus, en formant des super-groupes d'ordre 3 et en continuant de cette manière jusqu'à ce qu'un seul super-groupe contienne tous les appareils photographiques, la distance entre les axes optiques des appareils photographiques adjacents (Ci, Ci+1) étant égale à D/2^{m}, la 2^{m}ième partie de la distance D entre les appareils photographiques adjacents du même groupe.

7. Système optique selon la revendication 4 ou 5, comprenant, en outre, un système de moteurs pas à pas et un microprocesseur agencés en vue d'une régulation et d'une synchronisation des appareils photographiques d'enregistrement.

8. Système optique selon la revendication 4 ou 5, comprenant, en outre, un système mécanique de soufflets agencé en vue d'une régulation et d'une synchronisation des appareils photographiques d'enregistrement.
